# EUROPÄISCHE PATENTSCHRIFT

(11) **EP 2 478 276 B1**
(45) Veröffentlichungstag und Bekanntmachung des Hinweises auf die Patenterteilung: **31.07.2013**
(21) Anmeldenummer: 10755154.1
(22) Anmeldetag: 17.09.2010
(51) Int. Cl.: F16K 11/07, F16K 11/085, F01D 17/14

(54) **VENTIL FÜR EINE STRÖMUNGSMASCHINE**
VALVE FOR A TURBO MACHINE
SOUPAPE POUR TURBOMACHINE

(30) Priorität: 18.09.2009 EP 09011931
(43) Veröffentlichungstag der Anmeldung: 25.07.2012
(73) Patentinhaber: Siemens Aktiengesellschaft, 80333 München (DE)
(72) Erfinder: VETROV, Oleg, 45144 Essen (DE); BENNAUER, Martin, 46242 Bottrop (DE); SCHINDLER, Christoph, 45219 Essen (DE)
(86) Internationale Anmeldenummer: PCT/EP2010/063708
(87) Internationale Veröffentlichungsnummer: WO 2011/033069

(56) Entgegenhaltungen:
- EP-A1- 0 638 745
- EP-A1- 1 637 783
- DE-A1- 2 038 085
- FR-A- 612 647
- FR-A- 1 556 627
- FR-A1- 2 736 701
- US-A- 1 807 085
- US-A- 2 752 944
- US-A- 5 435 288

## Beschreibung

Die Erfindung betrifft ein Ventil für eine Strömungsmaschine, insbesondere eine Dampfturbine.

In Strömungsmaschinen, wie beispielsweise in Dampfturbinen, strömt das Strömungsmedium, hier Dampf, über ein Schnellschlussventil und einem Stellventil in die Dampfturbine. In der Regel umfasst eine Kraftwerksanlage neben einer Dampfturbine eine Dampfzuleitung sowie eine Umleitungsdampfleitung. Im Normalbetrieb strömt Dampf durch die Hauptleitung zur Dampfturbine. In besonderen Fällen, wie z.B. bei Lastabwürfen oder bei Trips, muss unter Umständen der Dampf in der Umleitdampfleitung an der Dampfturbine vorbeigeleitet werden.

Der Dampfdruck vor den Schnellschlussventilen und den Stellventilen wird durch die Umleitdampfleitungen begrenzt bzw. geregelt. Sobald die Stellventile und die Schnellschlussventile geschlossen werden, steigt der Dampfdruck vor diesen Ventilen an und die Umleitdampfleitung öffnet durch steigenden Druck mit kurzer Verzögerung. Der Dampfmassenstrom wird danach um die Dampfturbine geleitet. Die Dampfleitungen müssen besonderen Bedingungen standhalten und dementsprechend ausgelegt sein. Beispielsweise führt eine Änderung der Strömungsgeschwindigkeiten bei Lastabwürfen oder Trips zu einem Druckstoß, der bei der Auslegung der Dampfleitungen berücksichtigt werden muss. Es ist bekannt, die Dampfzufuhr zu einer Dampfturbine über hintereinander geschaltete Schnellschluss- und Stellventile zu realisieren.

Die FR 2 736 701 Al offenbart ein Ventil umfassend eine Zuleitung, eine Turbinenausgangsleitung und eine Umleitungsausgangsleitung.

Es ist Aufgabe der Erfindung, ein kombiniertes Schnellschluss- und Umleitventil anzubieten, das derart ausgebildet ist, dass ein Druckstoß vor dem Ventil ausbleibt.

Die Aufgabe wird gelöst durch ein Ventil, umfassend eine Zuleitung, eine Turbinenausgangsleitung und eine Umleitungsausgangsleitung sowie einen Ventilkörper, der derart ausgebildet ist, dass in einer ersten Stellung eine strömungstechnische Verbindung zwischen der Zuleitung und der Turbinenausgangsleitung entsteht und in einer zweiten Stellung eine strömungstechnische Verbindung zwischen der Zuleitung und der Umleitungsausgangsleitung entsteht.

Der Ventilkörper zylindrisch ausgebildet, wobei eine Änderung zwischen der ersten Stellung und der zweiten Stellung durch Bewegen des Ventilkörpers in Richtung der Rotationsachse erfolgt.

Im normalen und störungsfreien Betrieb ist der Ventilkörper in der ersten Stellung angeordnet. In dieser ersten Stellung liegt eine strömungstechnische Verbindung zwischen der Zuleitung und der Turbinenausgangsleitung vor. Das bedeutet, dass der von dem Dampferzeuger erzeugte Dampf über die Hauptzuleitung und Zuleitung zur Turbinenausgangsleitung und schließlich zur Dampfturbine geführt wird. In dieser ersten Stellung strömt kein Dampf zwischen der Zuleitung und der Umleitungsausgangsleitung. Sobald ein Störfall eintritt und der Dampf in die Umleitungsausgangsleitung umgelenkt werden soll, wird der Ventilkörper in Richtung der Rotationsachse linear bewegt, so dass der Ventilkörper von der ersten Stellung vergleichsweise schnell zur zweiten Stellung gelangt. Die strömungstechnische Verbindung, die in der ersten Stellung vorliegt, d.h. die Verbindung zwischen der Zuleitung und der Turbinenausgangsleitung wird geschlossen und in der zweiten Stellung wird der Dampf von der Zuleitung schließlich in die Umleitungsausgangsleitung schnell umgelenkt.

Der Ventilkörper weist in der ersten Stellung eine Stellventilleitung mit einem Stellventilleitungsquerschnitt zur strömungstechnischen Verbindung zwischen der Zuleitung und der Turbinenausgangsleitung auf, wobei der Stellventilleitungsquerschnitt durch Drehen des Ventilkörpers veränderbar ist.

Die Drehung des Ventilkörpers erfolgt durch einen Elektromotor. Mittels eines Elektromotors können hohe Kräfte übertragen werden und durch geeignete Übertragungsmechanismen kann der Ventilkörper schnell um die Rotationsachse bewegt werden. Der Stellventilleitungsquerschnitt wird durch Drehen des Ventilkörpers verändert. Das bedeutet, dass die Stellventilleitung einen Stellventilleitungsquerschnitt aufweist, der beim vollständigen Öffnen des Ventils im Wesentlichen die gleiche Querschnittsöffnung aufweist wie die Turbinenausgangsleitung. Durch Drehen des Ventilkörpers und der Stellventilleitung wird der Stellventilleitungsquerschnitt verändert, da ein Teil der Stellventilleitung durch Drehen des Ventilkörpers durch die Turbinenausgangsleitung verdeckt wird.

Die Zuleitung, die, Turbinenausgangsleitung und die Umleitungsausgangsleitung sind im Wesentlichen in einer Ebene angeordnet, was zu einfachen konstruktiven Maßnahmen führt.

Mit dem erfindungsgemäßen Ventil wird somit der neue Weg beschritten, für den Dampfturbinenbau ein Drei-Wege-Ventil einzusetzen. Der Dampfmassenstrom wird durch den Ventilkörper in der ersten Stellung sowie in der zweiten Stellung umgeleitet. Dies führt zu dem Effekt, dass der Dampf nicht mehr sprunghaft unterbunden wird, wie es bei den derzeitigen Ventilkombinationen im Stand der Technik geschieht. Die Dampfzufuhr vom Dampferzeuger wird somit ohne sprunghaften Druckanstieg vor dem Ventil in die Umleitung umgelenkt. Die Umleitung erfolgt daher in jedem Fall stoßfrei. Das bedeutet, ein Druckstoß tritt nicht auf.

Der Ventilkörper weist eine erste Druckbohrung auf, die eine strömungstechnische Verbindung zwischen der Zuleitung und der Umleitungsausgangsleitung in der ersten Stellung herstellt.

In der ersten Stellung wird im Wesentlichen der gesamte Dampf von der Zuleitung in die Turbinenausgangsleitung umgelenkt. Neben der Stellventilleitung im Ventilkörper weist der Ventilkörper eine erste Druckbohrung auf, die durch Drehen des Ventilkörpers eine strömungstechnische Verbindung herstellt zwischen der Zuleitung und der Umleitungsausgangsleitung in der ersten Stellung. Das bedeutet, dass der Großteil des Dampfes nach wie vor zwischen der Zuleitung und der Turbinenausgangsleitung bewegt wird. Allerdings wird auch ein Teil des Dampfes von der Zuleitung in die Umleitungsausgangsleitung umgelenkt.

Vorteilhafte Weiterbildungen sind in den Unteransprüchen angegeben.

I einer weiteren vorteilhaften Weiterbildung weist der Ventilkörper eine zweite Druckbohrung neben der ersten Druckbohrung auf, die durch weiteres Drehen des Ventilkörpers eine weitere strömungstechnische Verbindung zwischen der Zuleitung und der Umleitungsausgangsleitung in der ersten Stellung herstellt. Durch Verdrehen des Ventilkörpers kann somit schließlich die freie Durchtrittsfläche der Druckbohrungen variiert werden.

In einer weiteren vorteilhaften Weiterbildung ist der Ventilkörper in einem zylindrischen Ventilgehäuse angeordnet. Somit entsteht ein kombiniertes Ventil, das ein Regelventil und ein Schnellschlussventil in einem Ventilgehäuse unterbringt. Das Schnellschlussventil erfolgt durch schnelles Bewegen in linearer Richtung des Ventilkörpers, wobei das Regelventil durch Drehen des Ventilkörpers um die Rotationsachse funktioniert.

In einer vorteilhaften Weiterbildung ist im Ventilgehäuse eine Feder derart angeordnet, dass der Ventilkörper gegen die Federkraft in der ersten Stellung gehalten ist. Dies führt dazu, dass die Dampfzufuhr zur Dampfturbine über die Turbinenausgangsleitung freigegeben wird, in dem der Ventilkörper gegen die Feder in eine obere Stellung vertikal verfahren wird. In Folge eines Schnellschlusses wird die Haltekraft einfach aufgehoben, so dass nun die Feder gegen den Ventilkörper drückt und in eine untere Lage schnell verschiebt. Der Dampfmassenstrom wird dadurch augenblicklich umgeleitet und nicht abgebremst.

Die Erfindung wird anhand eines Ausführungsbeispiels näher erläutert. Bauteile mit denselben Bezugszeichen haben im Wesentlichen dieselbe Funktionsweise.

Es zeigen:
- Figur 1: eine perspektivische Darstellung des Ventils;
- Figur 2: eine Seitenansicht des Ventils;
- Figur 3: eine weitere Seitenansicht des Ventils;
- Figur 4: eine Querschnittsansicht des Ventils entlang der Linie IV aus Figur 2;
- Figur 5: eine Schnittansicht der Ebene V aus Figur 3;
- Figur 6: eine Schnittansicht entlang der Ebene VI aus Figur 3;
- Figur 7: eine vergrößerte Darstellung eines Teils aus Figur 6;
- Figur 8: eine Seitenansicht des Ventils mit dem geöffneten Schnellschluss;
- Figur 9: eine weitere Seitenansicht des Ventils im geöffneten Schnellschluss;
- Figur 10: eine Schnittdarstellung des Ventils im ungeöffneten Schnellschluss entlang der Linie VIII aus Fig. 8;
- Figur 11: einen Schnitt des Ventils entlang der Linie IX aus Figur 9;
- Figur 12: einen Schnitt des Ventils entlang der Linie VI aus Figur 3.

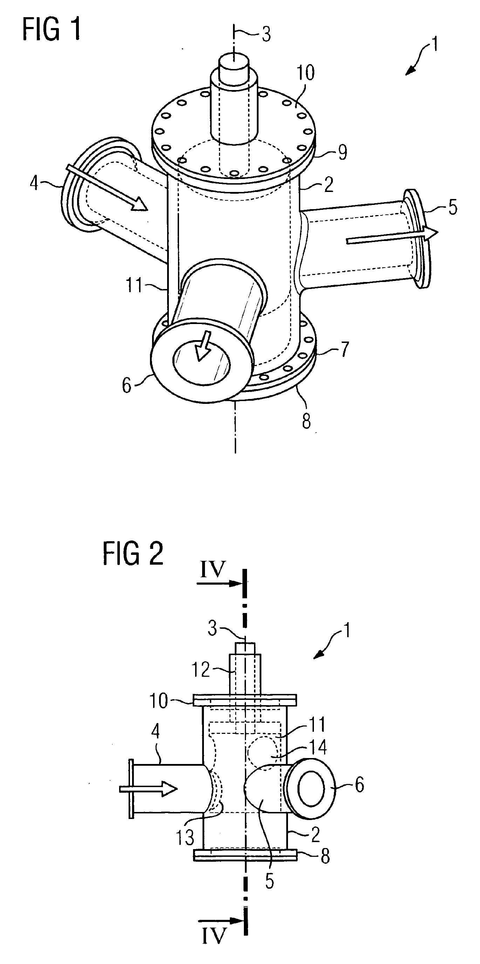

Die Figur 1 zeigt eine perspektivische Darstellung des Ventils 1. Das Ventil 1 umfasst ein Ventilgehäuse 2, das im Wesentlichen zylindrisch um eine Rotationsachse 3 ausgebildet ist. An das Ventilgehäuse 2 ist eine Zuleitung 4, eine Turbinenausgangsleitung 5 und eine Umleitungsausgangsleitung 6 angeordnet. Sowohl die Zuleitung 4 als auch die Turbinenausgangsleitung 5 und die Umleitungsausgangsleitung 6 sind im Wesentlichen als Rohre mit einem geeigneten Durchmesser ausgebildet.

Das Ventilgehäuse 2 umfasst an einem unteren Ende 7 einen unteren Ventildeckel 8. An einem oberen Ende 9 ist ein oberer Ventildeckel 10 angeordnet. Aus Symmetriegründen sind die Zuleitung 4, die Turbinenausgangsleitung 5 und die Umleitungsausgangsleitung 6 um 120° gegeneinander angeordnet.

In alternativen Ausführungsformen können die Zuleitung 4, die Turbinenausgangsleitung 5 und die Umleitungsausgangsleitung 6 in einem zu 120° unterschiedlichen Winkel angeordnet werden. Innerhalb des Ventilgehäuses 2 ist ein Ventilkörper 11 angeordnet, der zum einen in Richtung der Rotationsachse 3 über einen nicht näher dargestellten Antrieb bewegbar ist und zum anderen über einen ebenfalls nicht dargestellten Antrieb um die Rotationsachse 3 drehbar bewegt werden kann.

In der Figur 2 ist eine Seitenansicht des Ventils 1 zu sehen. Der Ventilkörper 11 ist unter einem Federkraftaufnehmer 12 angeordnet. Zwischen dem Federkraftaufnehmer 12 und dem oberen Ventildeckel 10 ist eine nicht näher dargestellte Feder angeordnet. Der Ventilkörper 11 wird mit dem Federkraftaufnehmer 12 in eine erste Stellung gebracht, bei der ein über die Zuleitung 4 kommender Dampf im Wesentlichen komplett zur Turbinenausgangsleitung 5 über eine im Ventilkörper 11 befindliche Stellventilleitung 13 realisiert wird. Der Federkraftaufnehmer 12 nimmt die Federkräfte auf, die somit nicht auf dem Ventilkörper 11 lasten. Dadurch kann der Ventilkörper 11 über die Achse verdreht werden. Das Hochziehen gegen die Federkräfte erfolgt durch einen Antrieb, der nicht an der Achse, sondern an einer Hohlwelle des Federkraftaufnehmers 12 zieht. Die Stellventilleitung 13 ist derart ausgebildet, dass in der ersten Stellung eine strömungstechnische Verbindung zwischen der Zuleitung 4 und der Turbinenausgangsleitung 5 entsteht.

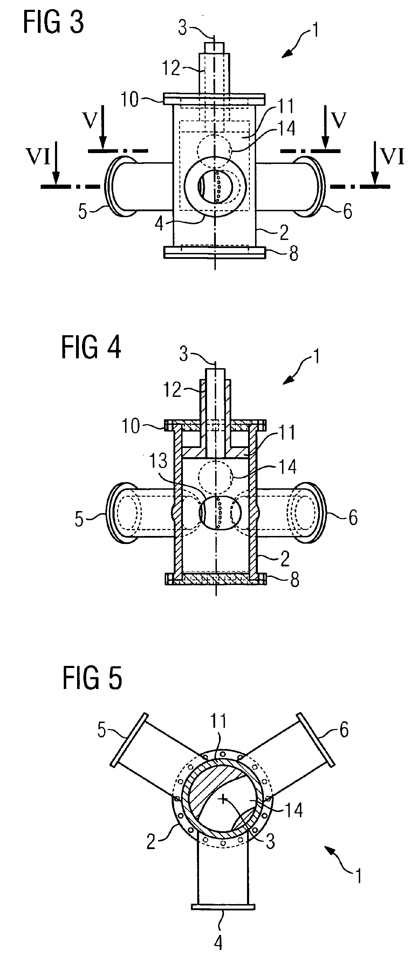

Die in Figur 3 dargestellte Ausführung des Ventils 1 zeigt das Ventil 1 in einer geöffneten Stellung.

In Figur 4 ist eine Querschnittansicht des Ventils 1 entlang der Linie IV aus Figur 2 zu sehen. Der Ventilkörper 11 wird zum Zwecke eines Schnellschlusses linear über nicht näher dargestellte Antriebsmotoren bewegt oder um die Rotationsachse 3 gedreht, um den Massenzufluss von der Zuleitung 4 zur Turbinenausgangsleitung 5 zu regeln.

In Figur 5 ist eine Schnittdarstellung durch das Ventil 1 entlang der Linie V gemäß Figur 3 zu sehen. Der Ventilkörper 11 weist eine Umleitungsventilleitung 14 auf, die den Dampf in der zweiten Stellung von der Zuleitung 4 in die Umleitungsausgangsleitung 6 umleitet. Die Umleitungsventilleitung 14 weist im Wesentlichen den gleichen Querschnitt auf wie die Zuleitung 4, die Turbinenausgangsleitung 5 oder die Umleitungsausgangsleitung 6.

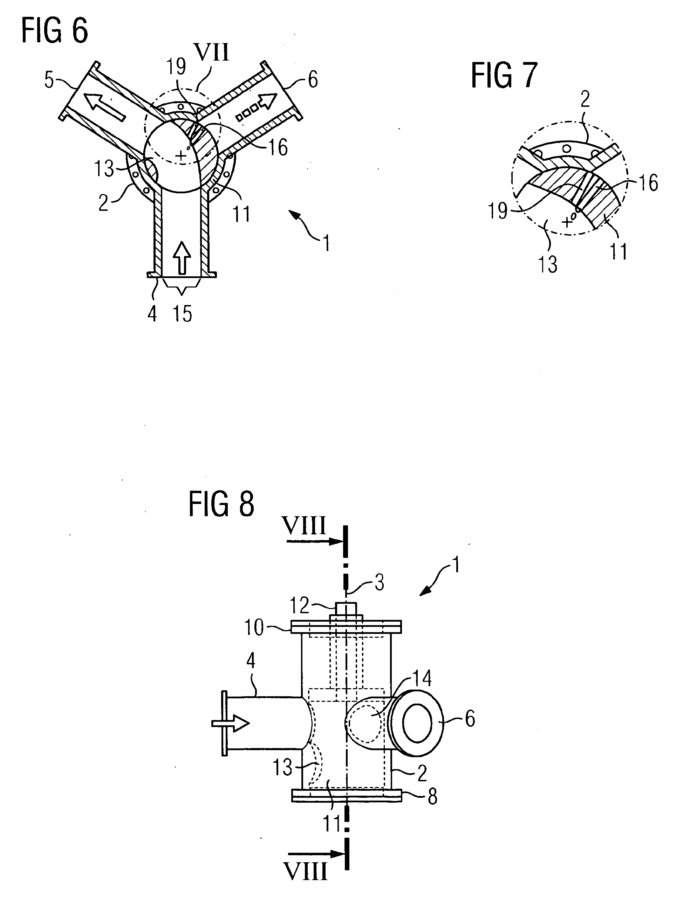

In der Figur 6 ist ein Schnitt des Ventils 1 entlang der Linie VI aus Figur 3 zu sehen. Der Ventilkörper 11 weist eine Stellventilleitung 13 auf, die eine strömungstechnische Verbindung in der ersten Stellung zwischen der Zuleitung 4 und der Turbinenausgangsleitung 5 herstellt. Der Stellventilleitungsquerschnitt 15 wird durch Drehen des Ventilkörpers 11 um die Rotationsachse 3 verändert.

Der Ventilkörper 11 weist des Weiteren eine erste Druckbohrung 16 auf. In der in Figur 6 dargestellten Stellung des Ventilkörpers 11 entsteht eine strömungstechnische Verbindung zwischen der Zuleitung 4 und der Umleitungsausgangsleitung 6 durch die erste Druckbohrung 16. Ein Teil des Massenstroms wird dadurch nicht zur Dampfturbine über die Turbinenausgangsleitung 5 geführt, sondern in die Umleitung über die Umleitungsausgangsleitung 6.

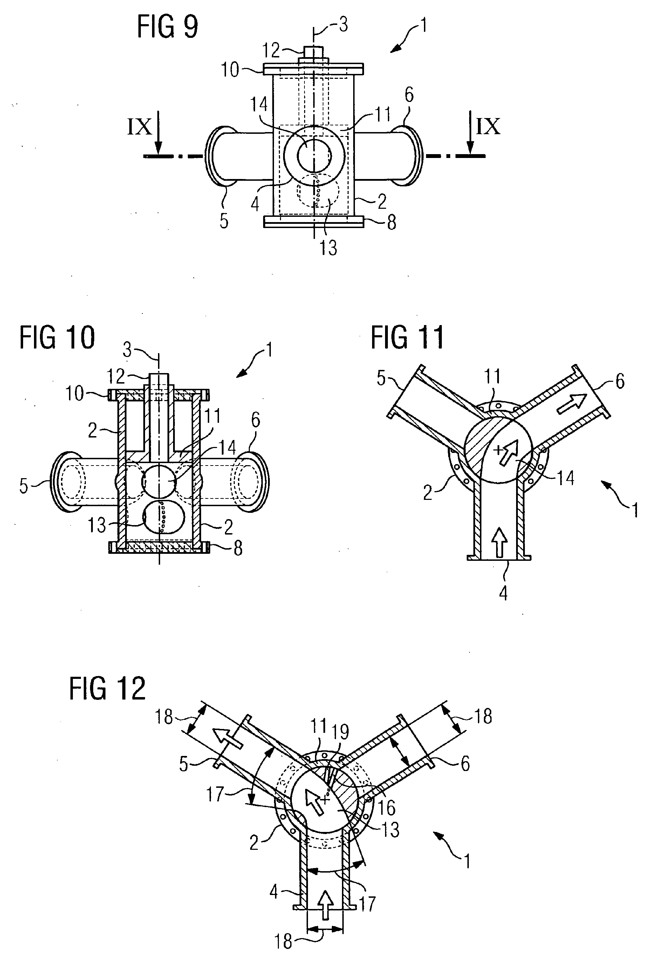

Die Figur 12 ist im Wesentlichen identisch mit der Figur 6, zeigt allerdings eine veränderte Stellung des Ventilkörpers 11. Die in Figur 12 gezeigte Stellung des Ventilkörpers 11 ist gegenüber der Stellung des Ventilkörpers 11 in der Figur 6 leicht gegen den Uhrzeigersinn gedreht, so dass über die erste Druckbohrung 16 nunmehr keine strömungstechnische Verbindung zwischen der Zuleitung 4 und der Umleitungsausgangsleitung 6 erfolgt. Der Ventilkörper 11 ist dabei derart ausgebildet, dass die Stellventilleitung 13 derart gestaltet ist, dass die freie Durchtrittsfläche des Dampfes durch die Stellventilleitung 13 in den Stellungen des Ventilkörpers 11 gemäß Figur 12 und Figur 6 gleich ist.

Dies erfolgt dadurch, dass sowohl am Eintritt in die Stellventilleitung 13 als auch am Austritt der Stellventilleitung 13 der Stellventilleitungsöffnungswinkel 17 größer ist als der Durchmesser 18 der Zuleitung 4, der Turbinenausgangsleitung 5 und der Umleitungsausgangsleitung 6 es erfordert.

Des Weiteren weist der Ventilkörper 11 eine zweite Druckbohrung 19 auf, der wie aus Figur 6 und Figur 12 zu erkennen ist, in einen gewissen Winkelbereich nach der ersten Druckbohrung 16 angeordnet ist. Die Druckbohrungen 16, 19 können durch eine geeignete, z. B. längliche Öffnung ersetzt und beliebig eingestellt werden. Durch weiteres Drehen des Ventilkörpers 11 in Uhrzeigerrichtung in Figur 6 entsteht eine weitere strömungstechnische Verbindung zwischen der zweiten Druckbohrung 19 und der Umleitungsausgangsleitung 6. Allerdings wird die freie Durchtrittsfläche am Eingang in den Ventilkörper 11 in der Stellventilleitung 14 verkleinert.

In der Figur 7 ist eine vergrößerte Darstellung der Druckbohrungen 16 und 19 aus Figur 6 dargestellt. Die in Figur 7 dargestellte Position des Ventilkörpers 11 zeigt eine vollständige Öffnung der ersten Druckbohrung 16 und eine teilweise Öffnung der zweiten Druckbohrung 19.

In den Figuren 8, 9, 10 und 11 ist das Ventil in der zweiten Stellung dargestellt. In dieser zweiten Stellung entsteht eine strömungstechnische Verbindung zwischen der Zuleitung 4 und der Umleitungsausgangsleitung 6. Dies erfolgt, indem die nicht dargestellte Feder schlagartig den Ventilkörper 11 in der Vertikalen nach unten bewegt. Dadurch wird die Stellventilleitung 13 komplett aus der Dampfzufuhr in der Zuleitung 4 entfernt und statt dessen wird die Umleitungsventilleitung 14 derart vor die Zuleitung 4 positioniert, dass der Dampf von der Zuleitung 4 komplett in die Umleitungsausgangsleitung 6 umgeleitet wird. Ein Dampfdurchtritt von der Zuleitung 4 in die Turbinenausgangsleitung 5 ist somit verhindert. Die in Figur 11 dargestellte Position des Ventilkörpers 11 zeigt einen Schnitt durch das Ventil 1 entlang der Linie IX aus Figur 9. Die Figur 10 zeigt einen Schnitt entlang des Ventils 1 entlang der Linie VIII aus Figur 8.

## Patentansprüche

1. Ventil (1),
umfassend eine Zuleitung (4), eine Turbinenausgangsleitung (5) und eine Umleitungsausgangsleitung (6) sowie einen Ventilkörper (11),
der derart ausgebildet ist,
dass in einer ersten Stellung eine strömungstechnische Verbindung zwischen der Zuleitung (4) und der Turbinenausgangsleitung (5) entsteht und
in einer zweiten Stellung eine strömungstechnische Verbindung zwischen der Zuleitung (4) und der Umleitungsausgangsleitung (6) entsteht,
wobei der Ventilkörper (11) zylindrisch ausgebildet ist und eine Änderung zwischen der ersten Stellung und der zweiten Stellung durch linzares Bewegen des Ventilkörpers (11) in Richtung der Rotationsachse (3) erfolgt,
wobei der Ventilkörper (11) in der ersten Stellung eine Stellventilleitung (13) mit einem Stellventilleitungsquerschnitt (15) zur strömungstechnischen Verbindung zwischen der Zuleitung (4) und der Turbinenausgangsleitung (5) aufweist,
wobei der Stellventilleitungsquerschnitt (15) durch Drehen des Ventilkörpers (11) veränderbar ist,
wobei die Zuleitung (4), die Turbinenausgangsleitung (5) und die Umleitungsausgangsleitung (6) im Wesentlichen in einer Ebene angeordnet sind,
wobei der Ventilkörper (11) eine erste Druckbohrung (16) aufweist,
die eine strömungstechnische Verbindung zwischen der Zuleitung (4) und der Umleitungsausgangsleitung (6) in der ersten Stellung herstellt.

2. Ventil (1) nach Anspruch 1,
wobei der Ventilkörper (11) eine zweite Druckbohrung (19) aufweist, die durch weiteres Drehen des Ventilkörpers (11) eine weitere strömungstechnische Verbindung zwischen der Zuleitung (4) und der Umleitungsausgangsleitung (6) in der ersten Stellung herstellt.

3. Ventil (1) nach einem der vorhergehenden Ansprüche,
wobei der Ventilkörper (11) in einem zylindrischen Ventilgehäuse (2) angeordnet ist.

4. Ventil (1) nach Anspruch 3,
wobei die Zuleitung (4), die Turbinenausgangsleitung (5) und die Umleitungsausgangsleitung (6) in das Ventilgehäuse (2) münden.

5. Ventil (1) nach Anspruch 3 oder 4,
wobei im Ventilgehäuse (2) eine Feder derart angeordnet ist,
dass der Ventilkörper (11) gegen die Federkraft in der ersten Stellung gehalten ist.

6. Ventil (1) nach Anspruch 5,
wobei der Wechsel von der ersten Stellung zur zweiten Stellung durch die Federkraft erfolgt.

## Claims

1. Valve (1)
comprising a supply line (4), a turbine outlet line (5) and a bypass outlet line (6) as well as a valve body (11),
which is designed in such a way
that in a first position a fluidic connection is established between the supply line (4) and the turbine outlet line (5) and
in a second position a fluidic connection is established between the supply line (4) and the bypass outlet line (6), wherein the valve body (11) has a cylindrical form and changing between the first position and the second position is effected by moving the valve body (11) linearly in the direction of the axis of rotation (3),
wherein the valve body (11) in the first position has a control valve line (13) with a control valve line cross section (15) for fluidic connection between the supply line (4) and the turbine outlet line (5),
wherein the control valve line cross section (15) can be changed by rotating the valve body (11),
wherein the supply line (4), the turbine outlet line (5) and the bypass outlet line (6) are arranged substantially in one plane,
wherein the valve body (11) has a first pressure bore (16), which establishes a fluidic connection between the supply line (4) and the bypass outlet line (6) in the first position.

2. Valve (1) according to Claim 1,
wherein the valve body (11) has a second pressure bore (19), which establishes a further fluidic connection between the supply line (4) and the bypass outlet line (6) in the first position when the valve body (11) is rotated further.

3. Valve (1) according to either of the preceding claims,
wherein the valve body (11) is arranged in a cylindrical valve housing (2).

4. Valve (1) according to Claim 3,
wherein the supply line (4), the turbine outlet line (5) and the bypass outlet line (6) open into the valve housing (2).

5. Valve (1) according to Claim 3 or 4,
wherein a spring is arranged in the valve housing (2) in such a way
that the valve body (11) is held in the first position against the spring force.

6. Valve (1) according to Claim 5,
wherein the switch from the first position to the second position is brought about by the spring force.

## Revendications

1. Robinet (1),
comprenant un conduit (4) d'admission, un conduit (5) de sortie de turbine et un conduit (6) de sortie de dérivation ainsi qu'un obturateur (11),
qui est constitué de manière
à ce que, dans une première position, une communication fluidique se crée entre le conduit (4) d'admission et le conduit (5) de sortie de turbine et,
dans une deuxième position, une communication fluidique se crée entre le conduit (4) d'admission et le conduit (6) de sortie de dérivation,
dans lequel, l'obturateur (11) est cylindrique et un passage entre la première position et la deuxième position s'effectue par un déplacement linéaire de l'obturateur (11) dans la direction de l'axe (3) de rotation,
dans lequel l'obturateur (11) a, dans la première position, un conduit (13) de robinet de réglage ayant une section (15) transversale de conduit de robinet de réglage pour la communication fluidique entre le conduit (4) d'admission et le conduit (5) de sortie de turbine,
dans lequel la section (15) transversale de conduit de robinet de réglage peut être modifiée en faisant tourner l'obturateur (11),
dans lequel le conduit (4) d'admission et le conduit (5) de sorite de turbine et le conduit (6) de sortie de dérivation sont disposés sensiblement dans un plan,
dans lequel l'obturateur (11) a un premier trou (16) de refoulement,
qui ménage une communication fluidique entre le conduit (4) d'admission et le conduit (6) de sortie de dérivation dans la première position.

2. Robinet (1) suivant la revendication 1,
dans lequel l'obturateur (11) a un deuxième trou (19) de refoulement qui ménage, dans la première position, en continuant à faire tourner l'obturateur (11), une autre communication fluidique entre le conduit (4) d'admission et le conduit (6) de sortie de dérivation.

3. Robinet (1) suivant l'une des revendications précédentes,
dans lequel l'obturateur (11) est disposé dans un corps (2) cylindrique de robinet.

4. Robinet (1) suivant la revendication 3,
dans lequel le conduit (4) d'admission, le conduit (5) de sortie de turbine et le conduit (6) de sortie de dérivation débouchent dans le corps (2) de robinet.

5. Robinet (1) suivant l'une des revendications 3 ou 4,
dans lequel, dans le corps (2) de robinet, est monté un ressort,
de manière à retenir l'obturateur (11) dans la première position à l'encontre de la force du ressort.

6. Robinet (1) suivant la revendication 5,
dans lequel le passage de la première position à la deuxième position s'effectue par la force du ressort.
